# EUROPEAN PATENT APPLICATION

(11) **EP 4 796 826 A1**
(43) Date of publication of application: **26.08.2026**
(21) Application number: 26159895.7
(22) Date of filing: 20.02.2026
(51) Int. Cl.: F16L 23/04, F16L 41/03, F16L 25/14, F16L 47/26

(54) **DISTRIBUTION DEVICE FOR AERAULIC SYSTEMS AND SYSTEM INCLUDING SUCH DEVICE**

(30) Priority: 21.02.2025 IT 202500003411
(71) Applicant: R.B.M. S.p.A., 25060 Polaveno (BS) (IT)
(72) Inventor: BOSSINI, Guido, 25060 POLAVENO (BS) (IT)
(74) Representative: Studio Torta S.p.A.

(57) **Abstract**

Distribution device for an aeraulic system, comprising at least a first and a second modular element (6A, 6B) each provided with a tubular main body (17, 26) having a first axis (A, D) and at least two opposite end portions (20) defining respective end openings (18), and at least one joint (49) configured to sealingly connect said modular elements (6A, 6B) with a freedom of rotation around said axis, wherein the joint (49) comprises an adapter element (43) freely couplable to one of the end portions (20) and locking means (50) for fixing the adapter element (43) with respect to the modular element (6A, 6B) in a desired angular position.

## Description

### CROSS-REFERENCE TO RELATED APPLICATIONS

This patent application claims priority from Italian patent application no. 102025000003411 filed on February 21, 2025, the entire disclosure of which is incorporated herein by reference.

### TECHNICAL FIELD

The present invention relates to a distribution device for aeraulic systems. The invention finds its preferred application in ventilation systems, to which reference will be made hereinafter without thereby losing generality.

The invention also relates to an aeraulic system comprising such device.

### BACKGROUND ART

Ventilation systems generally comprise a controlled mechanical ventilation machine and an aeraulic circuit for distributing air from the machine to the different rooms and for recovering the air from the rooms to the machine.

The distribution can be of the plenum or branched type.

In the first case, the machine's supply and suction are connected to a respective distribution chamber or plenum, from each of which conduits branch off to, or from, the various rooms.

In the second case, the conduits branch off from a common manifold from nodes distributed along the manifold.

A problem connected with known systems is the limited versatility of the components available on the market, which means that a large number of different components need to be used to produce different configurations and adapt to the peculiarities of each site.

A purpose of the present invention is to provide a modular distribution system, which allows aeraulic systems with different configurations, both for plenum distribution and for tree distribution, to be easily obtained with a limited number of basic components.

### SUMMARY OF THE INVENTION

According to the invention, this purpose is achieved by a distribution device for an aeraulic system according to claim 1.

The present invention also relates to a method for constructing an aeraulic system according to claim 14.

### BRIEF DESCRIPTION OF THE DRAWINGS

For a better understanding of the present invention, some preferred embodiments are described hereinafter, by way of non-limiting example and with reference to the accompanying drawings, wherein:
- Figure 1 schematically illustrates a plenum ventilation system according to the present invention;
- Figure 2 schematically illustrates a branched distribution ventilation system according to the present invention;
- Figures 3 to 5 are perspective views of modular distribution elements for a ventilation system according to the present invention;
- Figures 6 to 11 are perspective views of accessory devices for creating a ventilation system according to the present invention in combination with the modular elements in Figures 3-5;
- Figure 12 is a perspective view of a first example of a distribution device according to the present invention produced with two modular elements of the type illustrated in Figure 4;
- Figure 13 is an exploded perspective view of the device in Figure 12;
- Figure 14 is a median cross-section of the device in Figure 12;
- Figure 15 illustrates a detail of Figure 14 on an enlarged scale;
- Figure 16 is a perspective view of a second example of a distribution device according to the present invention;
- Figure 17 is an axial median cross-section of the device in Figure 16;
- Figures 18, 19 and 20 are side views of further examples of distribution devices according to the present invention;
- Figure 21 is a perspective and partial view of a branched distribution aeraulic system;
- Figures 22 and 23 are partial views partially in cross-section along lines XXII-XXII and XXIII-XIII of the system in Figure 21;
- Figure 24 is a perspective view of a variant of a detail of the system in Figure 21;
- Figure 25 is a front view of the detail in Figure 24 in two different operating positions;
- Figures 26 and 27 are longitudinal cross-sections of the detail in Figure 24, in two different applications.

### DETAILED DESCRIPTION OF THE INVENTION

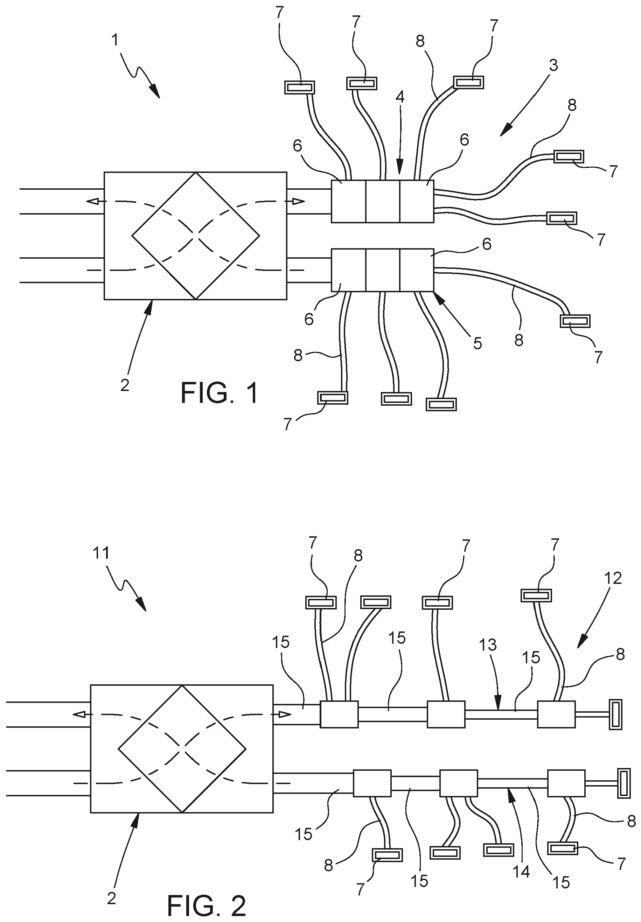

In Figure 1, there is schematically illustrated and indicated collectively by 1 a ventilation system comprising a ventilation machine 2 of a known type, not described in detail, and a plenum distribution aeraulic circuit 3.

In particular, the circuit 3 comprises a distribution plenum 4 and a recovery plenum 5 produced by means of multiple modular elements collectively indicated with the reference number 6, directly connected to each other and described in detail hereinafter.

Each modular element 6 is connected to one or more vents 7 for supplying or extracting air to/from a room via respective conduits 8.

In Figure 2, there is schematically illustrated and indicated collectively by 11 a ventilation system comprising a ventilation machine 2 of a known type and a branched distribution aeraulic circuit 12.

The circuit 12 comprises a distribution manifold 13 and a recovery manifold 14 along which modular distribution devices 6 are arranged according to the present invention. In this case, the devices 6 are not connected to each other directly, but by sections 15 of the distribution manifold 13 and the recovery manifold 14. The sections 15 can have different diameters depending on the air flow rate envisaged in each section; this allows pressure losses to be optimised.

Also in this case, the distribution devices 16 are each connected to one or more vents 7 for supplying or extracting air to/from respective rooms via respective conduits 8.

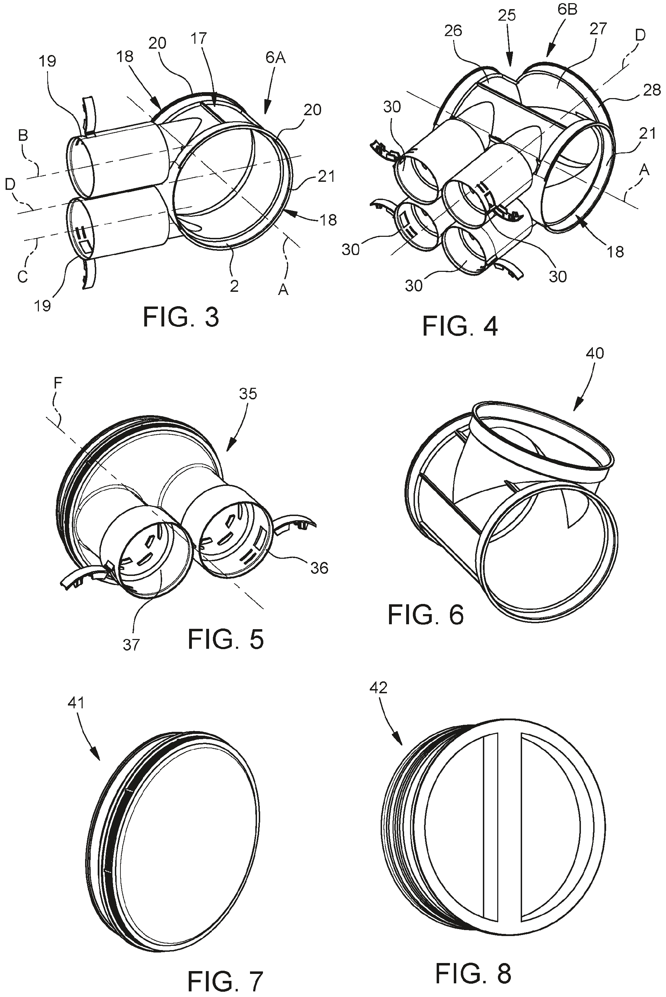

Figures 3 to 5 illustrates embodiments of the modular elements 6.

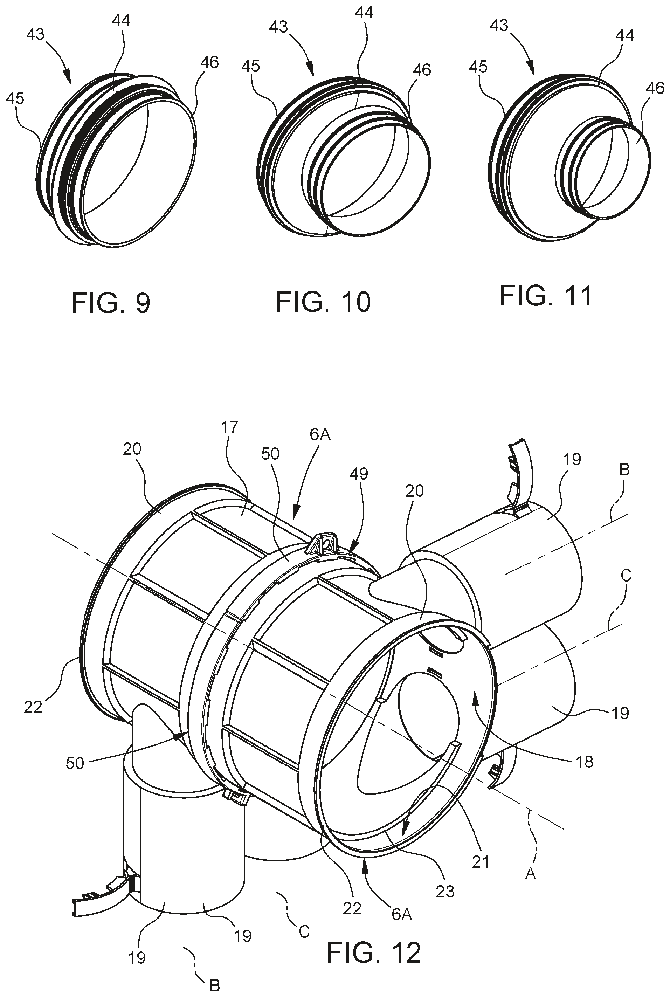

In particular, Figure 3 (and Figures 12-15 illustrating an application example) illustrates a modular element 6A comprising a tubular body 17 of axis A with corresponding end openings 18. From an intermediate zone of the tubular body two tubular branch ports 19 extend integrally and laterally, with axes B and C parallel to each other and lying on a plane perpendicular to the axis A in a symmetrical position with respect to an axis D perpendicular to the axis A. The branch ports 19 have a smaller diameter (for example, DN 90) than the tubular body 17 (for example, DN 200).

The openings 18 are defined by enlarged end portions 20 of the tubular body 17 defining respective annular seats 21 within them that are axially delimited by an internal shoulder 23. The end portions 20 have respective external end annular projections 22, the purpose of which will be clarified hereinafter.

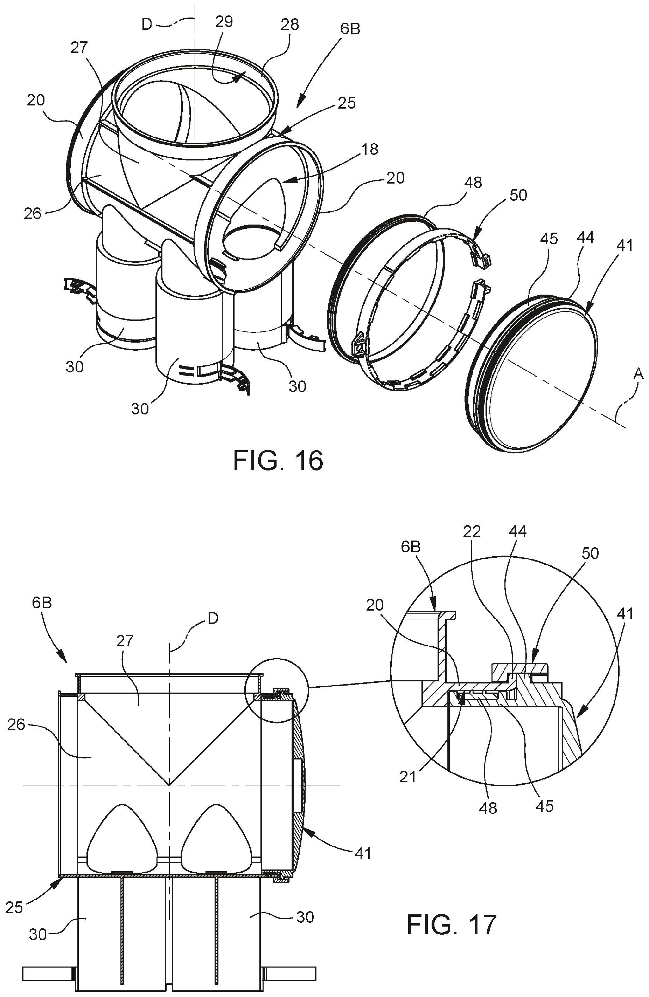

Figure 4 (and Figures 16 and 17 illustrating an example of its application) illustrates another embodiment of a modular distribution element 6B comprising a T-shaped body 25 formed by a tubular main section 26 of axis A, and a transverse section 27 of axis D perpendicular to axis A.

The main section 26 is provided with respective end openings 18 facing each other and defining respective annular seats 21 as described with reference to the example in Figure 3. The transverse section 27 in turn has an end portion 28 defining an annular seat 29 (Figure 16).

Finally, the body 25 comprises four branch ports 30 extending from a side wall of the main section 26 in the opposite direction to the transverse section 27.

The branch ports 30 have respective axes parallel to the axis D and arranged around it symmetrically with respect to a plane containing axes A and D and with respect to a plane perpendicular to the axis A and containing the axis D.

Figure 5 illustrates a cap 35 designed to be sealingly connected to an end opening 18, 29 of a modular element 6 and in turn provided with two branch ports 36 having axes parallel to each other and to an axis F of the cap 35.

Figures 6 to 11 illustrate accessory elements usable in combination with the modular elements 6.

Such accessory elements comprise a T-piece 40 (Figure 6), an inspection cap 41 (Figure 7) that can be coupled to an end opening 18, 29 of a modular element 6 and which is free of branch ports, and a branch cap 42 (Figure 8) sealingly couplable to a branch port 19, 30, 36.

Figures 9 to 11 illustrate annular adapters 43 that allow connection between circuit elements (modular element 6 or conduit section 15). Each adapter 43 comprises an intermediate radial flange 44 and two tubular portions 45, 46 extending from axially opposite sides of the flange 44 and coupling to respective circuit elements (for example, two modular elements 6) with relative freedom of rotation, as will be described in the following examples.

The adapter 43 of Figure 9 comprises two tubular portions 45, 46 of equal diameter (e.g., DN 200); the adapters 43 of Figures 10 and 11 have tubular portions 45, 46 with different diameters (e.g. DN 200/160 and DN 200/125, respectively) and allow the connection of circuit elements with corresponding diameters. The tubular portions 45, 46 can be offset from each other.

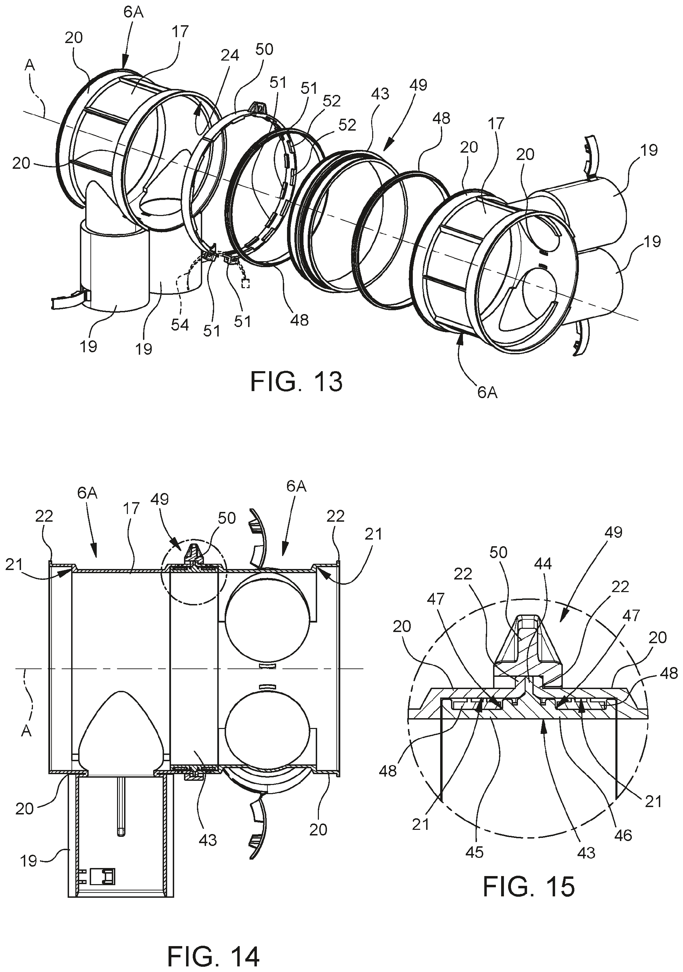

Each tubular portion 45, 46 (as better illustrated in Figure 15) has an annular seat 47 housing a gasket 48 designed to sealingly cooperate with a corresponding circuit element.

Figures 12 to 15 illustrate a distribution device comprising two modules 6A of the type illustrated in Figure 3. In particular, the two modules 6A are connected by coupling respective end portions 20 of the modules via a joint 49 that allows relative rotation between the modules around the common axis A.

The joint 49 is conveniently formed by an adapter 43 of the type illustrated in Figure 9, whose tubular portions 45, 46 engage the seats 21 of respective end portions 20 of the modules 6A facing each other, so that the projections 22 of the portions 20 come to an axial stop against the flange 44 of the adapter 43. The gaskets 48 ensure the seal between the adapter 43 and the respective end portions 21 of the modules 6A.

The joint 49 also comprises a flexible tightening band 50 configured to axially and rotationally wrap and lock the projections 22 of the modules 6A and the flange 44 together.

For this purpose, the band 50, under undeformed conditions, is essentially shaped like an open ring, i.e. C-shaped with ends 51 close together. The band 50 has internally two rows of projections 52, 53 (Figure 13) that are adjacent to the respective lateral edges of the band itself and spaced axially therebetween, so that they cooperate in use, on axially opposite sides, with the projections 22 of the modules 6A. The band 50 is preferably made of a plastic material. The projections 52, 53 of each row are spaced circumferentially apart, and the projections 52, 53 of the respective rows are angularly offset from each other, so as to facilitate the injection moulding of the band 50.

The ends 51 of the band 48 are ring-shaped to allow passage of a tightening tie 54, for example a cable tie illustrated schematically in Figure 13, designed to be tightened in use to pull the ends 49 towards each other and to lock them and therefore tighten the band 50 so as to embrace the projections 22 of the modules 6A and tighten the latter against the flange 44 of the adapter 43, thus axially and angularly locking the modules 6A together, which in the example illustrated in Figures 12 to 15 are arranged with their respective branch ports 19 oriented at 90° to each other.

Figures 16, 17 illustrate an example of a distribution device comprising a modular element 6B and a cap 41 as illustrated in Figure 7.

As can be clearly seen in the enlarged detail of Figure 17, the cap 41 is provided with a flange 44, a tubular portion 45 and a gasket 48 identical to the corresponding elements of the adapter 43 described hereinbefore. The tubular portion 45 of the cap 41 engages the annular seat 29 of an end portion 28 of the modular element 6B, and the cap is secured by means of a band 50 embracing the flange 44 of the cap 41 and the annular projection 22 of the end portion 20 of the modular element 6B.

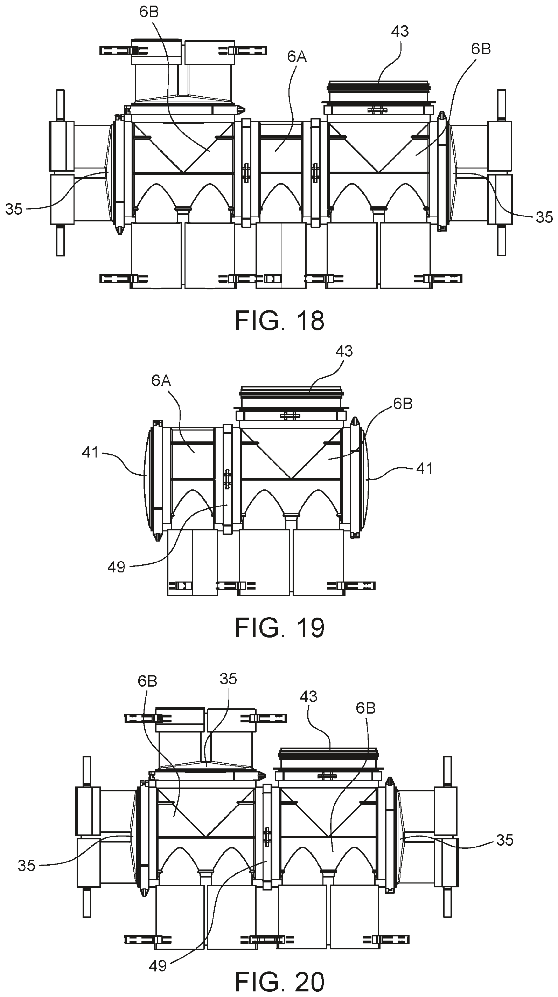

Figures 18, 19 and 20 illustrate distribution plenums 4 made by combining modules 6A and 6B and caps 35, 40.

The plenum 4 in Figure 18 comprises two modules 6B and a modular element 6A interposed therebetween and connected to them via respective joints 49. The two modules 6B are provided with caps 35 at their end portions 20 opposite those connected to the modular element 6A.

One of the modules 6B is fitted with an adapter 43 at the end portion 28. The adapter 43 constitutes an inlet of the plenum 4 that can be connected to a DN 160 conduit (not shown) .

The plenum 4 of Figure 19 differs from that of Figure 18 in that it comprises only a modular element 6B and a modular element 6A, which have respective end portions 20 connected to each other via a joint 49 and respective opposite end portions closed by respective caps 41. The plenum 4 therefore has one inlet and six outlets.

The plenum 4 of Figure 20 differs from that of Figure 18 in that it comprises two modules 6B directly connected to each other via a joint 49, without the interposition of a modular element 6A.

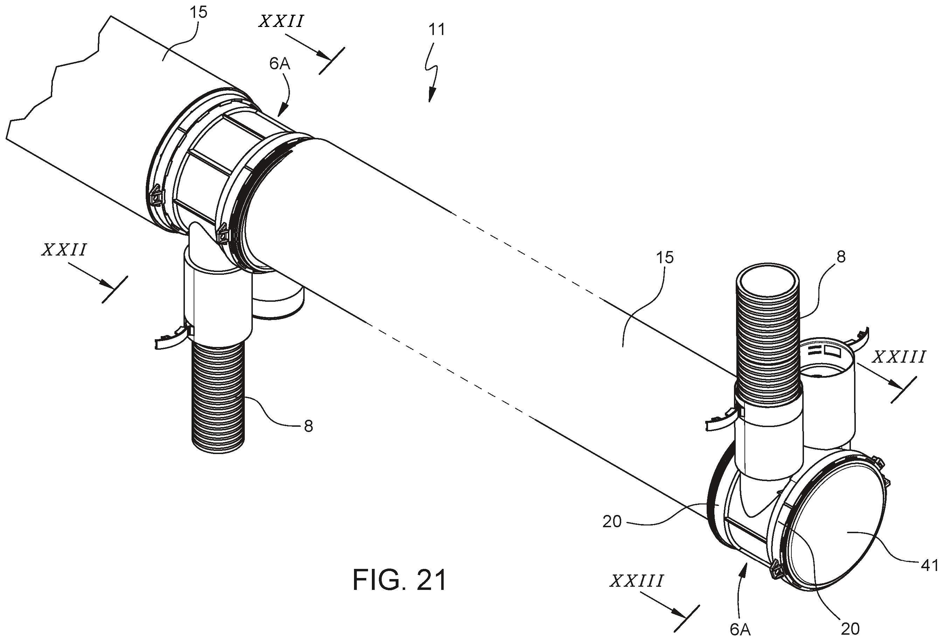

Figure 21 illustrates an end portion of a branched distribution ventilation system 11.

The system 11 comprises two conduit sections 15, with different diameters, which are interconnected by a first modular element 6A of the type described hereinbefore.

The end section 15 is connected to a first end portion 20 of a second modular element 6A, a second end portion 20 of which is closed with a cap 41.

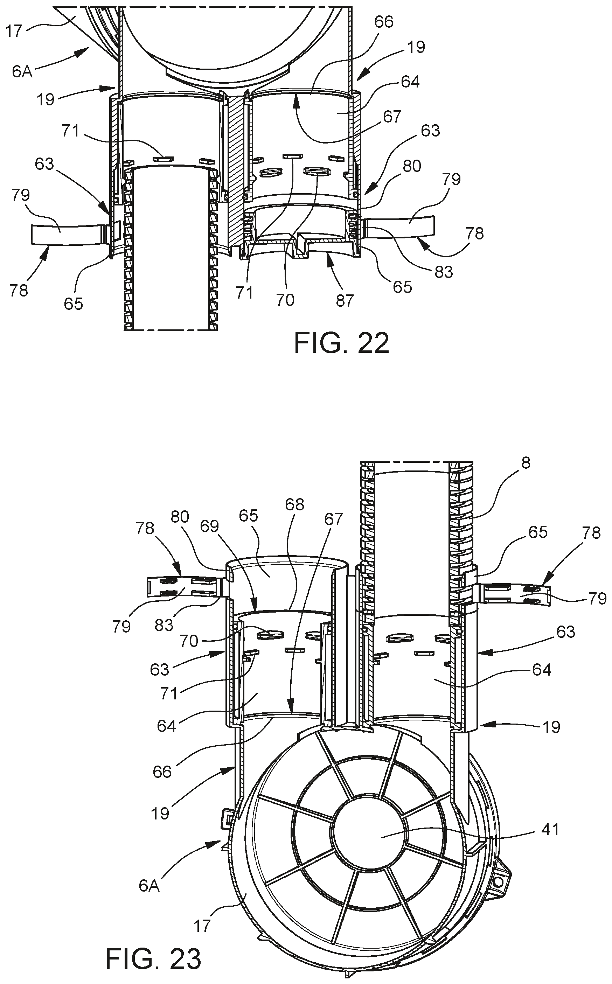

With reference to Figures 22 and 23, the modular elements 6A each comprise two branch ports 19. Each branch port 19 is provided with a multifunction coupling 63 according to a further aspect of the present invention.

Each coupling 63 comprises a first and second axially adjacent portion 64, 65, with a smaller and larger diameter respectively, dimensioned to accommodate conduits 8 with different diameters (e.g. DN 75 in Figure 22 and DN 90 in Figure 23).

In the embodiment illustrated in Figures 22 and 23, the first portion 64 is defined by an essentially cylindrical sleeve (hereinafter "the sleeve 64") housed in the respective branch port 19. The sleeve 64 has a first end 66 arranged abutting against an internal shoulder 67 of the branch port 19 in the vicinity of the main body 17 of the modular element 6A and snap-coupled thereto, and a second end 68 directed towards a free end of the branch port 19, which defines the second portion 65 of the coupling 63.

The second end 68 of the sleeve then defines an axial shoulder 69 separating the first portion and the second portion of the coupling 63.

The sleeve 64 has two rows of circumferentially, equispaced internal projections 70, 71.

The projections 70 are arranged near the second end 68 of the sleeve 64; the other projections 71 are axially spaced apart from the first projections 70 towards the first end portion 66.

The projections 70, 71 are circumferentially offset from each other; in particular, the projections 70 are axially facing the spaces between the other projections 71, and vice versa, to facilitate the moulding of the sleeve 64, conveniently made of plastic material.

A coupling 63 of the modular element 6A of Figure 22 is connected to an externally corrugated conduit 8, one end of which is housed in the second end 68 of the sleeve 64 and of which the teeth 70 snap couple with a groove. The teeth 71 define an axial end-stop for the conduit 8.

A coupling 63 of the modular element 6A of Figure 23 is connected to another externally corrugated conduit 8, with a larger diameter than the conduit 8 in Figure 22, one end of which is housed in the free end of the branch port 19, i.e. in the second portion 65 of the coupling 63; in this case, the axial end-stop for the conduit 8 is the second end 66 of the sleeve 64.

The couplings 63 are equipped with respective locking elements 78 configured to axially lock the conduits 8 in the couplings.

Such locking elements 78 comprise, in the example illustrated, a movable dowel 79 integrally connected to a side wall 80 of the respective branch port 19 by means of a virtual hinge 83 that is movable between an open position (illustrated in Figures 22 and 23) and a locked position.

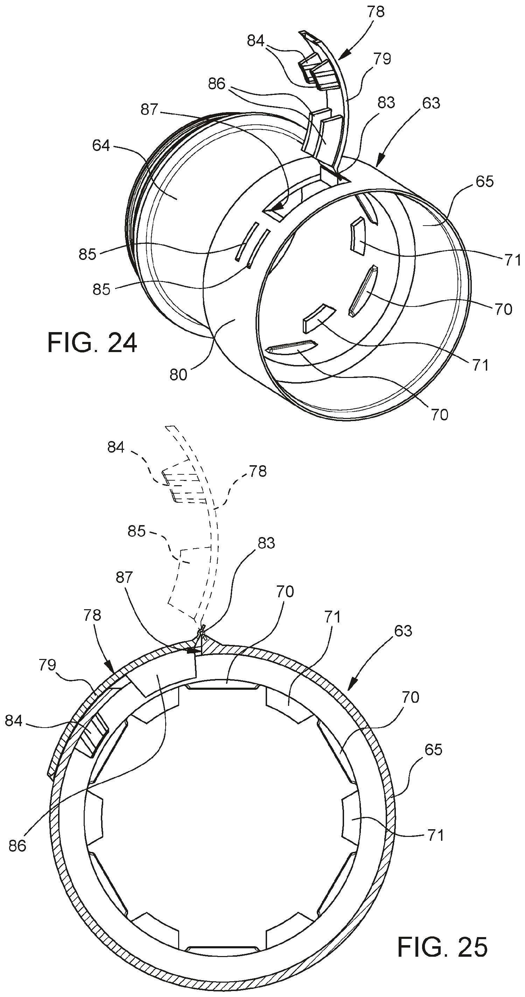

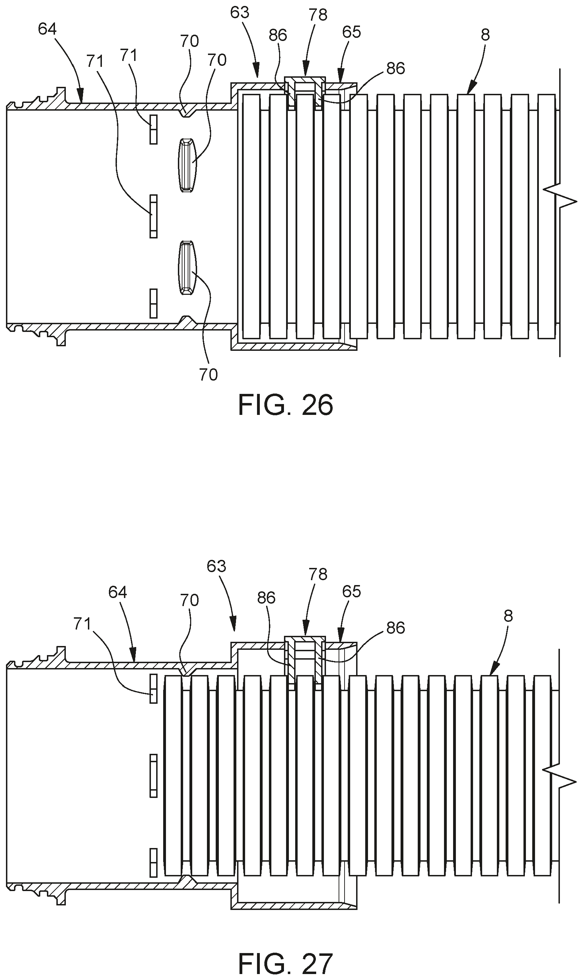

The locking elements 78 are illustrated in greater detail in Figures 24 to 27, which illustrate an embodiment wherein the first and second portions 64, 65 of the coupling 63 are made of a single piece that can be used, therefore, as an autonomous accessory element of the system and, for example, can be connected to a modular element 6A or 6B by means of a joint or adapter element.

With reference to Figures 24-27, the locking element 78 has internally a pair of teeth 84 that are designed to cooperate with respective notches 85 of the second portion 64 to hold the locking element in a closed position, and respective appendages 86 designed to cooperate with respective grooves of a corrugated conduit 8 through an opening 87 of the second portion 64 so as to axially lock the conduit itself.

The couplings 63 can be used not only for the connection of conduits 8, but also for the connection of other accessory elements of the system. For example, Figure 22 illustrates how a valve 87 is housed in one of the couplings 63, whose structure is not described in detail as it is not part of the present invention. The valve 87 can also be configured to be locked in the coupling 63 by means of the locking element 78.

The advantages enabled by the present invention will be apparent from an examination of the features thereof.

Through the use of modular elements that connectable to each other in an adjustable manner, either directly or via conduits, it is possible to produce both systems with plenum distribution and systems with tree distribution, starting from a reduced number of basic modular elements.

Different configurations can therefore be produced economically, efficiently and with a high degree of flexibility.

## Claims

1. Distribution plenum (4) for an aeraulic system, comprising:
- at least one first modular element (6) provided with a tubular main body (17, 26) having a first axis (A) and at least two opposite end portions (20) defining respective end openings (18),
- at least one second modular element (6B) provided with a tubular main body (17, 26) having a first axis (A, D) and at least two opposite end portions (20) defining respective end openings (18), and
- at least one joint (49) sealingly connecting the first modular element (6A) with the second modular element (6B) with a freedom of rotation around said axis,
said joint (49) comprising an adapter element (43) rotatably couplable to respective end portions (20) of the first modular element (6A) and the second modular element (6B) and locking means (50) for fixing the adapter element (43) with respect to the modular element (6A, 6B) in a desired angular position.

2. Plenum according to claim 1, wherein at least one of the first modular element (6A) and the second modular element (6B) comprises a transverse section (27) extending from the main body (26) along a second axis (D) perpendicular to the first axis (A) and provided with an end portion (28) defining a respective end opening (29).

3. Plenum according to claim 1 or 2, wherein at least one of the first modular element (6A) and the second modular element (6B) comprises at least one branch port (19, 30) extending from the main body (17, 26) in a direction parallel to a third axis (D) orthogonal to the first axis (A).

4. Plenum according to claim 3, wherein said at least one of the first modular element (6A) and the second modular element (6B) comprises at least two branch ports (19) having axes (B, C) arranged in a parallel and symmetrical position with respect to the third axis (D) on a plane perpendicular to the first axis (A) and containing the third axis (D).

5. Plenum according to claim 3, wherein said one of the first modular element (6A) and the second modular element (6B) comprises four branch ports (30) having axes arranged around the third axis (D) symmetrically with respect to a plane containing the first and third axes (A, D) and with respect to a plane perpendicular to the first axis (A) and containing the third axis (D).

6. Plenum according to one of claims 3 to 5, when dependent on claim 2, wherein the second and third axes (D) coincide.

7. Plenum according to any of the preceding claims, wherein the adapter element (43) has a pair of tubular portions (45, 46), a first tubular portion (45) being coupled to a seat (21) of an end portion (20) of the first modular element (6A), a second tubular portion (46) being couplable to a seat of an end portion of the second modular element (6B).

8. Plenum according to claim 7, wherein the adapter element (43) comprises an intermediate external flange (44), and the locking means comprise a band (50) suitable for embracing and tightening the flange (44) of the adapter element and at least one external projection (22) of the end portion (20, 28) of the modular element (6A, 6B).

9. Plenum according to claim 8, wherein the band (50) is elastic and has end eyelets (51) configured to be pulled towards each other and locked together by a tightening tie (54).

10. Plenum according to one of the preceding claims, comprising at least one cap (35) securable to an end portion (20, 28) and defining at least one branch port (36, 36).

11. Plenum (4) for an aeraulic system according to any of the previous claims, comprising at least one joint (49) connecting at least one of the first modular element (6A) and the second modular element (6A, 6B) with a conduit.

12. Method for installing a modular plenum (4) of an aeraulic system comprising the following steps:
connecting at least one first modular element (6) provided with a tubular main body (17, 26) having a first axis (A, D) and at least two opposite end portions (20) defining respective end openings (18) to a second modular element (6A, 6B) provided with a tubular main body (17, 26) having a first axis (A) and at least two opposite end portions (20) defining respective end openings (18) by means of an adapter element (43) rotatably couplable to respective end portions (20) of the first modular element (6A) and the second modular element (6B);
rotating the first modular element (6A, 6B) around its axis (A) to position it in the desired orientation with respect to the second modular element (6A, 6B); and
locking the first modular element (6A, 6B) with respect to the second modular element (6A, 6B) using said locking means (50).
